# FASCICULE DE BREVET EUROPEEN

(11) **EP 2 473 365 B1**
(45) Date de publication et mention de la délivrance du brevet: **24.07.2013**
(21) Numéro de dépôt: 10752878.8
(22) Date de dépôt: 27.07.2010
(51) Int. Cl.: B62D 1/16, B62D 25/00

(54) **VEHICULE AUTOMOBILE COMPORTANT UN CIRCUIT DE REFROIDISSEMENT D'UN MODULE D'ALIMENTATION ELECTRIQUE**
KRAFTFAHRZEUG MIT KREISLAUF ZUR KÜHLUNG EINES STROMVERSORGUNGSMODULS
MOTOR VEHICLE COMPRISING A CIRCUIT FOR COOLING AN ELECTRIC POWER SUPPLY MODULE

(30) Priorité: 31.08.2009 FR 0955940
(43) Date de publication de la demande: 11.07.2012
(73) Titulaire: Peugeot Citroën Automobiles S.A., 78140 Vélizy Villacoublay (FR)
(72) Inventeur: SPEHNER, Maxime, F-25630 Sainte Suzanne (FR)
(74) Mandataire: Rosenberg, Muriel Sylvie
(86) Numéro de dépôt international: PCT/FR2010/051590
(87) Numéro de publication internationale: WO 2011/023875

(56) Documents cités:
- EP-A1- 1 829 724
- WO-A1-2005/018973
- WO-A1-2009/096584
- JP-A- 2005 324 771
- US-A1- 2008 196 957

## Description

La présente invention concerne un véhicule automobile notamment de type hybride thermique/électrique ou tout électrique, plug-in ou pas.

Un tel véhicule comporte au moins une machine électrique de traction alimentée par un module d'alimentation électrique, et un circuit de refroidissement de ce module

Classiquement, un conduit d'extraction est relié au module d'alimentation : il permet d'évacuer l'air chaud produit par le module lors de son fonctionnement.

En effet, il est nécessaire d'évacuer l'air chaud produit par le module d'alimentation, par exemple par une ou plusieurs batteries, afin d'assurer son bon fonctionnement. Si cet air chaud n'est pas évacué efficacement, le module d'alimentation et ses différents composants risquent de s'endommager, au risque à termes d'entraîner un dysfonctionnement de ces derniers.

De plus, cet air chaud, s'il n'est pas évacué, risque de perturber le confort thermique des passagers.

Il est donc nécessaire de prévoir une évacuation de cet air chaud à l'extérieur du véhicule et le plus rapidement possible.

D'autre part, compte tenu de l'encombrement important du module d'alimentation électrique, généralement disposé dans le plancher du coffre, juste derrière les sièges arrière du véhicule, il est important de pouvoir optimiser l'encombrement du circuit de refroidissement.

L'encombrement du module d'alimentation et de son circuit de refroidissement réduisent d'autant la place utile du coffre.

Comme le montre le document US2008/0196957, le circuit de refroidissement est disposé derrière les sièges arrière du véhicule et s'étend vers l'arrière du véhicule et le conduit d'évacuation débouche soit sur le côté du coffre entre le coffre et l'aile arrière du véhicule, soit directement dans le coffre du véhicule. Un véhicule comprenant les caractéristiques du préambule de la revendication 1 est connu du document WO 2009/09 65 84 A1.

Le conduit d'evacuation de l'air chaud reste donc toujours complètement contenu dans la carrosserie du véhicule à l'arrière de l'habitacle.

Une telle implantation a pour inconvénients, d'être d'une part très encombrante et, d'autre part de ne pas permettre d'évacuer rapidement les calories en dehors du véhicule.

Il en résulte une perte de confort thermique pour les passagers et notamment les passagers arrière.

La présente invention a pour put de pallier ces inconvénients en proposant une solution compacte, permettant d'évacuer les calories au plus près du module d'alimentation et permettant donc, à la fois d'optimiser l'encombrement du circuit de refroidissement et le confort thermique des passagers.

Un autre avantage découlant de l'implantation du circuit de refroidissement selon l'invention, est de prévoir un dispositif accélérant l'évacuation de l'air chaud qui ait le moins d'impact audible possible pour les passagers du véhicule.

A cet effet, la présente invention propose un véhicule selon la revendication 1.

Selon une caractéristique, la sortie d'air du conduit d'évacuation fait saillie sous le plancher du véhicule au voisinage immédiat d'un passage de roue du véhicule.

Selon une autre caractéristique, la sortie d'air du conduit d'évacuation fait saillie sous le plancher du véhicule au voisinage immédiat d'un passage de roue du véhicule, et à l'arrière du passage de roue.

Selon une autre caractéristique, le pulseur est disposé entre la peau extérieure de la carrosserie et le panneau arrière intérieur du passage de roue.

Selon une autre caractéristique, les conduits d'entrée et de sortie sont branchés sur un même côté du module d'alimentation et ont des formes complémentaires.

Selon une caractéristique des conduits, le conduit de sortie comporte un premier tronçon branché en sortie du module d'alimentation, et un deuxième tronçon branché entre la sortie du premier tronçon et l'entrée du pulseur ; les premier et deuxième tronçons étant reliés entre eux par un soufflet de raccordement assurant à la fois, une liaison mécanique souple entre les premier et deuxième tronçons, et évitant les remontées de vibrations vers l'habitacle du véhicule.

Selon une autre caractéristique du conduit d'évacuation, la partie coudée est sensiblemment vrillée vers l'arrière du véhicule.

Selon une autre caractéristique du conduit d'évacuation, la sortie d'air du conduit d'évacuation est fermée par un caplet mobile apte à s'ouvir au passage d'un flux d'air sortant du circuit de refroissement et à se fermer en l'abscence de flux d'air, obturant ainsi le conduit d'évacuation.

Selon une autre caractéristique, le module d'alimentation est disposé dans l'espace du coffre du véhicule.

D'autres caractéristiques et avantages de l'invention apparaîtront au cours de la description qui va suivre, donnée à titre d'exemple et faite en référence aux dessins annexés, sur lesquels :
la figure 1 est une vue en perspective d'une partie arrière de véhicule automobile sur laquelle est installée un module d'alimentation électrique et son circuit de refroissement selon l'invention ;
la figure 2 est une vue de côté arrière du véhicule, laissant visible le passage de la roue arrière et le circuit de refroidissement selon l'invention ;
la figure 3 est une vue similaire à celle de la figure 2 mais où n'apparaît que la partie visible du circuit de refroidissement ressortant de la carrosserie du véhicule quand le parechoc arrière n'est pas monté.

Sur les figures, les mêmes éléments portent la même référence numérique.

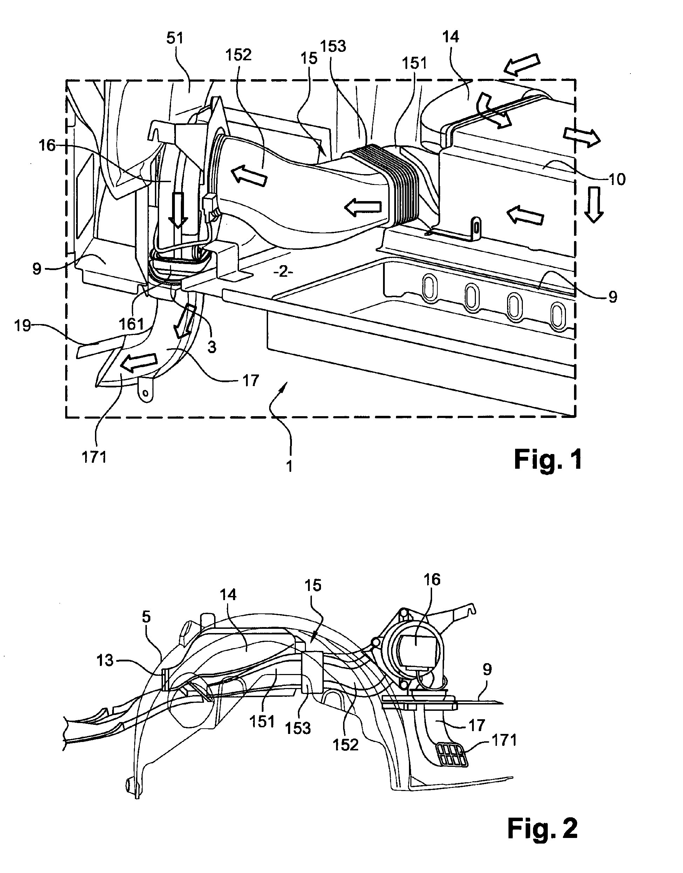

Sur la figure 1, on a représenté une partie de structure 1 de véhicule, ce véhicule comportant un moteur électrique, non représenté, alimenté par un module d'alimentation 10.

De manière connue, la structure 1 comporte au moins un plancher, délimitant la partie inférieure de l'habitacle du véhicule, qui porte des éléments destinés à l'aménagement de l'intérieur du véhicule. Sur la figure 1, seule la partie arrière 2 du plancher est représentée.

Le plancher est réalisé de manière classique par l'assemblage de tôles formées par emboutissage et assemblées entre elles par soudure. Le plancher comporte en outre des éléments de structure tels que des longe-ronnets et des traverses, non représentés, supportant la tôle formant la surface du plancher et, notamment, la tôle 9 formant le plancher de charge située au niveau du coffre 6 du véhicule.

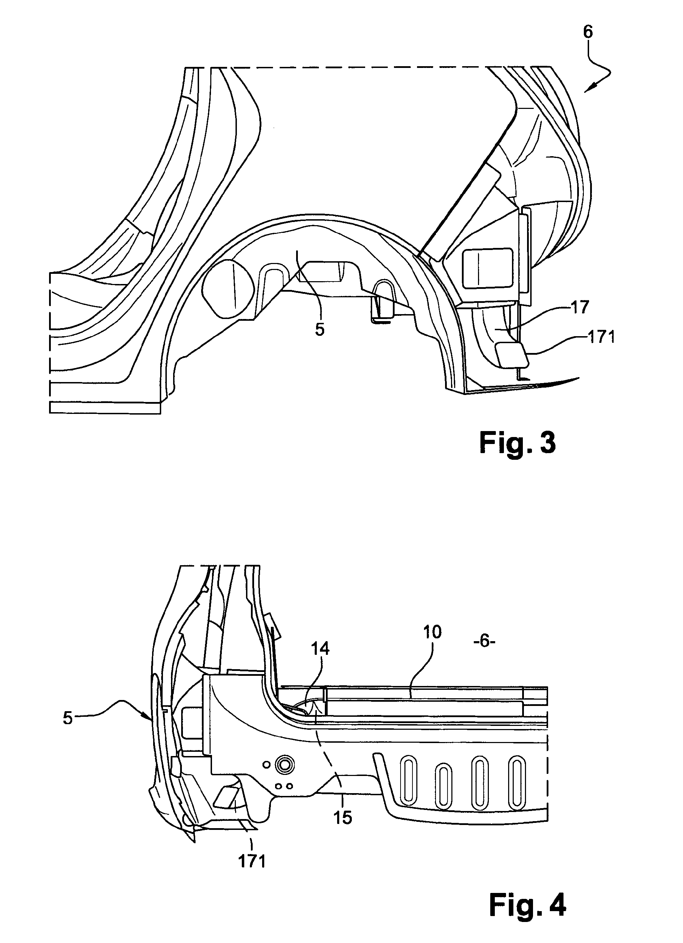

Comme montré sur les figures 2 et 3, un passage de roue 5 s'étendant sensiblement selon la direction verticale du véhicule, est soudé notamment au plancher de charge 9 (pancher du cofffre) ainsi qu'à un longeronnet disposé à proximité, non représenté. Le passage de roue 5 est fixé dans sa partie supérieure à la peau extérieure du véhicule, non représentée, par l'intermédiaire de pièces de structure, non représentés, de manière à délimiter un logement recevant la partie supérieure de la roue.

Le module d'alimentation 10 est fixé sur le plancher de charge 9, au niveau du coffre 6 du véhicule, derrière les sièges arrière du véhicule qui ne son pas réprésentés. Sa fixation est réalisée sur des traverses et/ou longeronnets disposés à proximité.

Le module d'alimentation 10 peut inclure tout dispositif destiné à stoker et fournir de l'énergie et/ou de la puissance au moteur électrique. Ce dispositif peut par exemple comprendre des éléments unitaires, tels que des batteries au plomb, des cellules Li-ion, se présentant sous forme prismatique, cylindrique, de sachet souple ... et reliés entre eux par des circuits électriques. Le module d'alimentation 10 est contenu dans un réceptacle fermé par un couvercle, destiné à recevoir et à protéger le module d'alimentation, et formant un boîtier rigide et hermétique. Dans l'exemple représenté à la figure 1, le module d'alimentation 10 est une batterie et pour simplifier la description, on utilisera le terme « batterie » pour désigner à la fois la batterie et le boîtier renfermant la batterie.

Le circuit de refroidissement comporte de son entrée vers sa sortie : un conduit d'entrée 14, fournissant l'air frais provenant de l'habitacle, à la batterie 10, un conduit de sortie 15 récupérant l'air réchauffé par la batterie et comportant deux tronçons 151 et 152 reliés entre eux par un soufflet 153, un pulseur 16 destiné à accélérer l'évacuation de l'air chaud vers l'extérieur du véhicule, et un conduit d'évacuation 17 coudé à sa sortie permettant d'évacuer l'air chaud sous le plancher du véhicule.

Selon l'invention, le conduit d'entrée 14 est sévèrement coudé à 90° pour présenter un encombrement minimal entre la bouche d'entrée 18 du conduit 14 et sa sortie. La bouche d'entrée 18 du conduit d'entrée 14 est disposée sensiblement au niveau du plancher 9 et le conduit d'entrée 14 remonte rapidement vers le haut de la batterie 10, de telle sorte que sa sortie soit branchée hermétiquement au niveau du couvercle du boîtier 10, sur un des petits cotés du boîtier 10 qui présente une forme générale parallélépipédique.

L'entrée du premier tronçon 151 du conduit de sortie 15, est branchée hermétiquement sur le même petit côté et s'étend du bas du boîtier 10 en étant également sévèrement coudée à 90° mais dans le sens opposé à celui du conduit d'entrée 14.

Le conduit d'entrée 14 et le premier tronçon 153 du conduit de sortie 15 sont conformés pour remplir un minimum de place entre le passage de roue 9 et la batterie 10, d'une part et, d'autre part, de manière à ne pas dépasser la hauteur de la batterie 10.

On voit notamment sur les figures 1 et 2 que les volumes du conduit d'entrée14 et du premier tronçon 153 du conduit de sortie 15, s'épousent parfaitement et ne dépassent pratiquement pas du petit côté de la batterie 10.

La sortie d'air du boîtier 10 est sensiblement au même niveau que la bouche d'entrée 18 du conduit d'entrée 14.

Le second tronçon 152 du conduit de sortie 15 est branché hermétiquement à la sortie du premier tronçon 151 par un soufflet de raccordement 153.

Le second tronçon 153 est vrillé sensiblement à 90° à partir du soufflet 153 jusqu'à l'entrée du pulseur 16 sur lequel il est branché hermétiquement.

Le pulseur 16 comporte une turbine qui est agencée dans un plan sensiblement vertical et l'air qui arrive à l'entrée du pulseur arrive sensiblement dans l'axe de la turbine.

Le soufflet de raccordement 153 a pour première fonction de fournir une liaison mécanique souple entre le premier tronçon 151 du conduit de sortie 15 et le second tronçon 152 facilitant ainsi le changement de direction du conduit de sortie 15, et a pour deuxième fonction d'amortir les vibrations remontant du pulseur 16 vers la batterie 10 et donc vers l'habitacle, vibrations qui sont transmises par le deuxième tronçon 152 du conduit de sortie 15.

La sortie 12 du pulseur 16 est orientée de manière à propulser l'air vers le bas selon une direction sensiblement verticale et donc une direction perpendiculaire au plancher 9 du coffre.

La sortie 12 du pulseur débouche au niveau d'un orifice 3 réalisé dans le plancher 9 du véhicule entre le passage de roue 5 et le bord du plancher 9 du coffre. La fixation de la sortie 12 du pulseur 16 est réalisée grâce à une embase 13 solidaire de la sortie 12. L'orifice 3 et l'embase 13 possèdent des formes complémentaires de manière à ce que la fixation de l'embase 13 sur l'orifice 3 soit réalisée de façon étanche. Selon le mode de réalisation représenté, l'orifice 3 et l'embase 13 possèdent sensiblement une forme triangulaire.

Dans cette implantation, le pulseur est disposé au voisinage immédiat de l'arrière du passage de roue, et dans l'exemple décrit, il est disposé derrière le passage de roue de la roue arrière du véhicule.

Cette disposition particulière du pulseur a pour avantage de masquer le bruit du pulseur 16 vis-à-vis de l'habitacle étant donné que le pulseur 16 est disposé entre la peau extérieure de la carrosserie et le panneau arrière intérieur 51 du passage de roue 5.

Le conduit d'évacuation 17, est branché hermétiquement sur l'embase étanche 13, à l'extérieur du plancher 9.

Il comporte une partie droite dont l'extrémité libre 171 est coudée vers l'extérieur du véhicule.

Le conduit d'évacuation 17 s'étend d'abord sensiblement selon une direction verticale puis il est coudé sensiblement à 90° en étant vrillé de quelques dégrés vers l'arrière du véhicule. Dans l'exemple considéré, la longueur de la partie droite est d'environ 140 mm et la partie coudée est vrillée d'un angle d'environ 7,1 °.

Des essais en roulage du véhicule dans des conditions sévères notamment sur route mouillée ou poussiéreuse, ont mis en évidence que l'étanchéité d'une évacuation au niveau du plancher 9 n'était pas suffisante pour éviter les remontées d'eau et des poussières à l'intérieur du circuit de refroidissement.

La partie droite du conduit d'avacuation, prolongée d'une partie coudée permettent d'empêcher toute remontée d'eau par projection vers le dessous du plancher.

D'autre part, la localisation du circuit d'évacuation 17 au plus près de l'arrière du passage de roue 5 permet de bénéficier de l'effet déflecteur de ce dernier vis-à-vis des projections d'eau et de poussière.

La longueur de la partie droite, et l'orientation de la partie coudée sont optimisées pour favoriser l'évacuation de l'air chaud tout en évitant les remontées de projections liquide ou solide.

On peut également prévoir un clapet 19 à la sortie du coude pour éviter les remontées de poussière ou autre corps solide à l'intérieur du conduit d'évacuation.

Le clapet 19 est, de manière connue, monté à rotation dans sa partie supérieure. Il ferme naturellement, par gravité, l'ouverture de l'extrémité coudée et s'ouvre quand un flux d'air sort par le conduit 17.

Ainsi, grâce au circuit de refroidissement selon l'invention, l'expulsion de l'air chaud est réalisée à courte distance de la batterie et donc plus rapidement vers l'extérieur du véhicule augmentant ainsi le confort thermique des passagers du véhicule.

D'autre part, l'encombrement du circuit de refroidissement est optimisé au maximun pour offir un système totalement compact s'intégrant dans un espace réduit, derrière le passage de roue, entre le passage de roue et le petit côté de la batterie.

Bien évidemment, l'invention n'est pas limitée au mode de réalisation décrit ci-dessus. Ainsi, l'extrémité du conduit d'extraction de l'air chaud peut déboucher à l'arrière de la roue arrière droite et d'autres formes peuvent être données aux conduits d'entrée et de sortie sans pour autant sortir du cadre de la présente invention.

## Revendications

1. Véhicule, notamment un véhicule automobile, comportant au moins une machine électrique de traction alimentée par un module d'alimentation (10) électrique et un circuit de refroidissement de l'air chaud produit par ledit module d'alimentation (10), ledit circuit de refroidissement comportant des conduits d'entrée (14) et de sortie (15) d'air branchés sur le module d'alimentation (10), un pulseur d'air (16) accélérant la circulation d'air en sortie du conduit de sortie (15) et un conduit d'extraction d'air (17) évacuant l'air provenant du pulseur (16) vers l'arrière du véhicule, **caractérisé en ce que** le conduit d'évacuation d'air (17) est disposé de telle manière que la sortie d'air (171) du conduit d'évacuation (17) fait saillie sous le plancher (9) du véhicule et **en ce que** le conduit d'évacuation d'air (17) comporte une partie droite branchée sous le plancher (9) et **en ce que** son extrémité libre (171) est coudée vers l'extérieur du véhicule.

2. Véhicule selon la revendication précédente, **caractérisé en ce que** la sortie d'air (171) du conduit d'évacuation (17) fait saillie sous le plancher (9) du véhicule au voisinage immédiat d'un passage de roue (5) du véhicule.

3. Véhicule selon la revendication précédente, **caractérisé en ce que** la sortie d'air (171) du conduit d'évacuation (17) fait saillie sous le plancher (9) du véhicule au voisinage immédiat d'un passage de roue (5) du véhicule, et à l'arrière du passage de roue (5).

4. Véhicule selon la revendication précédente, **caractérisé en ce que** le pulseur (16) est disposé entre la peau extérieure de la carrosserie et le panneau arrière intérieur du passage de roue (5).

5. Véhicule selon l'une des revendications précédentes, **caractérisé en ce que** les conduits d'entrée (14) et de sortie (15) sont branchés sur un même côté du module d'alimentation (10) et ont des formes complémentaires.

6. Véhicule selon l'une des revendications précédentes, **caractérisé en ce que** le conduit de sortie (15) comporte un premier tronçon (151) branché en sortie du module d'alimentation (10), et un deuxième tronçon (152) branché entre la sortie du premier tronçon (151) et l'entrée du pulseur (16) ; les premier et deuxième tronçons (151, 152) étant reliés entre eux par un soufflet de raccordement (153) assurant à la fois une liaison mécanique souple entre les premier et deuxième tronçons (151, 152) et évitant les remontées de vibrations vers l'habitacle du véhicule.

7. Véhicule selon la revendication précédente, **caractérisé en ce que** la partie coudée (171) est sensiblemment vrillée vers l'arrière du véhicule.

8. Véhicule selon l'une des revendications précédentes, **caractérisé en ce que** la sortie d'air (171) du conduit d'évacuation (17) est fermée par un caplet mobile (19) apte à s'ouvir au passage d'un flux d'air sortant du circuit de refroissement et à se fermer en l'abscence de flux d'air, obturant ainsi le conduit d'évacuation (17).

9. Véhicule selon l'une des revendications précédentes, **caractérisé en ce que** le module d'alimentation (10) est disposé dans l'espace du coffre (6) du véhicule.

## Patentansprüche

1. Fahrzeug, insbesondere ein Kraftfahrzeug, das mindestens eine elektrische Zugmaschine aufweist, die von einem elektrischen Versorgungsmodul (10) versorgt wird, und einen Kühlkreislauf der Warmluft, die von dem Versorgungsmodul (10) erzeugt wird, wobei der Kühlkreislauf eine Lufteingangsleitung (14) und eine Luftausgangsleitung (15) aufweist, die auf dem Versorgungsmodul (10) angeschlossen sind, ein Luftgebläse (16), das die Luftzirkulation am Ausgang der Ausgangsleitung (15) beschleunigt, und eine Luftabzugsleitung (17), die Luft, die von dem Gebläse (16) kommt, zur Rückseite des Fahrzeugs ableitet, **dadurch gekennzeichnet, dass** die Luftabzugsleitung (17) derart angeordnet ist, dass der Luftausgang (171) der Luftabzugsleitung (17) unter dem Fußboden (9) des Fahrzeugs vorsteht, und dass die Luftabzugsleitung (17) einen geraden Teil aufweist, der unter dem Fußboden (9) angeschlossen ist, und dass ihr freies Ende (171) zum Äußeren des Fahrzeugs abgewinkelt ist.

2. Fahrzeug nach dem vorhergehenden Anspruch, **dadurch gekennzeichnet, dass** der Luftausgang (171) der Luftabzugsleitung (17) unter dem Fußboden (9) des Fahrzeugs in der unmittelbaren Nähe eines Radlaufs (5) des Fahrzeugs vorsteht.

3. Fahrzeug nach dem vorhergehenden Anspruch, **dadurch gekennzeichnet, dass** der Luftausgang (171) der Luftabzugsleitung (17) unter dem Fußboden (9) des Fahrzeugs in der unmittelbaren Nähe eines Radlaufs (5) des Fahrzeugs und an der Rückseite des Radlaufs (5) vorsteht.

4. Fahrzeug nach dem vorhergehenden Anspruch, **dadurch gekennzeichnet, dass** das Gebläse (16) zwischen der Außenverkleidung der Karosserie und der hinteren inneren Tafel des Radlaufs (5) angeordnet ist.

5. Fahrzeug nach einem der vorhergehenden Ansprüche, **dadurch gekennzeichnet, dass** die Lufteingangsleitung (14) und die Luftausgangsleitung (15) auf ein und derselben Seite des Versorgungsmoduls (10) angeschlossen sind und komplementäre Formen haben.

6. Fahrzeug nach einem der vorhergehenden Ansprüche, **dadurch gekennzeichnet, dass** die Luftausgangsleitung (15) einen ersten Abschnitt (151) aufweist, der am Ausgang des Versorgungsmoduls (10) angeschlossen ist, und einen zweiten Abschnitt (152), der zwischen dem Ausgang des ersten Abschnitts (151) und dem Eingang des Gebläses (16) angeschlossen ist, wobei der erste und der zweite Abschnitt (151, 152) miteinander durch einen Anschlussbalg (153) verbunden sind, der sowohl eine mechanische biegsame Verbindung zwischen dem ersten und dem zweiten Abschnitt (151, 152) sicherstellt, als auch das Aufsteigen von Schwingungen zu der Fahrgastzelle des Fahrzeugs vermeidet.

7. Fahrzeug nach dem vorhergehenden Anspruch, **dadurch gekennzeichnet, dass** der abgewinkelte Teil (171) im Wesentlichen zur Rückseite des Fahrzeugs verdreht ist.

8. Fahrzeug nach einem der vorhergehenden Ansprüche, **dadurch gekennzeichnet, dass** der Luftausgang (171) der Luftabzugsleitung (17) durch eine bewegliche Klappe (19) verschlossen ist, die sich bei der Passage eines Luftstroms, der aus dem Kühlkreislauf austritt, öffnen kann, und sich bei Fehlen von Luftstrom schließen kann und daher die Luftabzugsleitung (17) verschließt.

9. Fahrzeug nach einem der vorhergehenden Ansprüche, **dadurch gekennzeichnet, dass** das Versorgungsmodul (10) in dem Raum des Kofferraums (6) des Fahrzeugs angeordnet ist.

## Claims

1. A vehicle, in particular a motor vehicle, comprising at least one electric traction machine powered by an electric power supply module (10) and a circuit for cooling the hot air produced by the said power supply module (10), the said cooling circuit comprising air inlet ducts (14) and air outlet ducts (15) connected to the power supply module (10), an air pulser (16) accelerating the circulation of air at the outlet of the outlet duct (15) and an air extraction duct (17) evacuating the air originating from the pulser (16) towards the rear of the vehicle, **characterized in that** the air evacuation duct (17) is disposed such that the air outlet (171) of the evacuation duct (17) projects beneath the floor (9) of the vehicle and **in that** the air evacuation duct (17) comprises a straight portion connected beneath the floor (9) and **in that** its free end (171) is bent towards the exterior of the vehicle.

2. The vehicle according to the preceding claim, **characterized in that** the air outlet (171) of the evacuation duct (17) projects beneath the floor (9) of the vehicle in the immediate vicinity of a wheel arch (5) of the vehicle.

3. The vehicle according to the preceding claim, **characterized in that** the air outlet (171) of the evacuation duct (17) projects beneath the floor (9) of the vehicle in the immediate vicinity of a wheel arch (5) of the vehicle, and at the rear of the wheel arch (5).

4. The vehicle according to the preceding claim, **characterized in that** the pulser (16) is disposed between the exterior skin of the body and the interior rear panel of the wheel arch (5).

5. The vehicle according to one of the preceding claims, **characterized in that** the inlet (14) and outlet (15) ducts are connected on the same side of the power supply module (10) and have complementary shapes.

6. The vehicle according to one of the preceding claims, **characterized in that** the outlet duct (15) comprises a first section (151) connected at the outlet of the power supply module (10), and a second section (152) connected between the outlet of the first section (151) and the inlet of the pulser (16); the first and second sections (151, 152) being connected with one another by a connecting bellows (153) ensuring both a flexible mechanical connection between the first and second sections (151, 152) and preventing upward movements of vibrations towards the passenger compartment of the vehicle.

7. The vehicle according to the preceding claim, **characterized in that** the bent portion (171) is substantially twisted towards the rear of the vehicle.

8. The vehicle according to one of the preceding claims, **characterized in that** the air outlet (171) of the evacuation duct (17) is closed by a mobile valve (19) able to open on passage of a flow of air leaving the cooling circuit, and able to close in the absence of a flow of air, thus closing off the evacuation duct (17) .

9. The vehicle according to one of the preceding claims, **characterized in that** the power supply module (10) is disposed in the space of the boot (6) of the vehicle.
